# EUROPÄISCHE PATENTANMELDUNG

(11) **EP 1 050 791 A1**
(43) Veröffentlichungstag der Anmeldung: **08.11.2000**
(21) Anmeldenummer: 99108968.1
(22) Anmeldetag: 06.05.1999
(51) Int. Cl.: G06F 1/00, G06F 17/60

(54) **Verfahren zur sicheren Erhebung von Bewegungsdaten**

(71) Anmelder: Jerzy, Thomas, 41065 Mönchengladbach (DE)
(72) Erfinder: Jerzy, Thomas, 41065 Mönchengladbach (DE)
(74) Vertreter: Freiherr von Gravenreuth, Günter, Dipl.-Ing. (FH)

(57) **Zusammenfassung**

Die Erfindung betrifft ein Verfahren zur Erhebung von Daten, wobei bei jedem Zugriff auf eine Top-Level-Datei und/oder nachgeordneter Dateien, in einem ersten Verfahrensschritt alle Veränderungsdaten eines bewegungsorientiertem Dateneingabegerätes in einem Speicher abgespeichert werden.

## Beschreibung

Die Erfindung betrifft ein Verfahren zur (sicheren) Erhebung und/oder Ermittlung von Bewegungsdaten, welche mittelbar oder unmittelbar von Datenverarbeitungsgeräten oder Roboter erzeugt werden.

Es besteht ein Bedürfnis dahingehend, von beliebigen Datenverarbeitungsgeräten oder Robotern erzeugte Bewegungsdaten vorzugsweise zum Zwecke einer späteren Auswertung zu erheben.

Derartige Bewegungsdaten auf einem Datenverarbeitungsgerät werden beispielsweise durch einen Menschen beim Betrachten eines virtuellen Kaufhauskataloges (im Internet oder auf einem Datenträger wie einer CD-ROM) erzeugt. Die Homepage des virtuellen Kaufhauses einschließlich aller ihrer Verlinkungen auf alle ihrer Seiten ist bekannt. Erfaßt werden sollen die Cursor- oder Mausbewegungen und/oder -eingaben, bzw. alphanumerische Eingaben des Besuchers des virtuellen Kaufhauses, wobei diese Daten durch korrespondierende Daten, wie z.B. der System-Uhr des Rechners oder Protokolldaten des Rechners ergänzt werden können. Auf diese Weise entstehen Daten über Bewegungsbilder und Verweildaten im virtuellen Kaufhaus. So kann zum Beispiel festgestellt werden, in welcher Reihenfolge der Besucher welche Abteilungen des virtuellen Kaufhauses aufgesucht hat und wie lang er in den einzelnen Abteilungen verweilt hat. In Verbindung mit konkreten Bestellungen kann dann noch eine Auswertung beispielsweise dahingehend erfolgen, wieviele Abteilungen der Besucher des virtuellen Kaufhauses passiert hat, bis er eine erste Bestellung tätigte, wie lange er in welcher Abteilung verweilte, bis er eine Bestellung tätigte. Ob er andere Abteilungen besuchte, um anschließend in jene Abteilung zurückzukehren, in den er eine Bestellung tätigte etc.

Im Bereich der Robotertechnik ist es bekannt, daß Roboter die Reihenfolge und Art ihrer Bewegungsabläufe durch künstliche Intelligenz (KI) "selbst bestimmen" können. Eine Erfassung von Bewegungsdaten der Roboter kann sowohl zur Erhöhung der Sicherheit im Bereich der Roboteranwendung, als auch zur Optimierung deren KI-Software verwendet werden.

Die Bewegungsdaten der Roboter werden hierbei entweder durch eignete Sensoren erfaßt oder durch den Roboter selbständig protokolliert.

Es liegt auf der Hand, daß ebenfalls unter Verwendung geeigneter Sensoren auch Bewegungs- und Arbeitsabläufe von Menschen zu Zwecken der Ergonomie erfaßt werden können.

Derartige Bewegungsdaten sind oft ein Betriebsgeheimnisse oder sind als datenschutzrechtlich relevante Daten so zu erheben und zu ermitteln, daß
a) die Identität des erhobenen Objekts eindeutig ist,
b) nur solche Daten erhoben werden, welche für die spätere Auswertung von Relevanz sind, wobei bei der Erhebung bereits eine Differenzierung beispielsweise hinsichtlich der späteren Auswertung in Bewegungsdaten und Bestelldaten vorgenommen werden kann und
c) die Daten in einer Form übermittelt werden, daß ihre Entschlüsselung schwierig ist.

Es sind unterschiedlichste Verfahren zur Identifizierung eines Benutzers eines Datenverarbeitungsgeräts bekannt.

Die wohl ältesten Verfahren bestehen in der Verwendung von alphanumerischen Paßwörtern. Paßwörter können gehackt oder anderweitig erlangt werden, so daß ein unbefugter Zugriff ermöglicht wird.

Bekannt sind ferner verschiedene biologische Sicherungsverfahren (biometrisches Verfahren). In derartigen biologischen Sicherungsverfahren werden unveränderliche Merkmale des Menschen wie beispielsweise Fingerabdrücke, Sprache oder die Iris seines Auges zur Identifizierung verwendet. Ein Nachteil dieser Verfahren ist es, daß ein erheblicher technischer Aufwand erforderlich ist. Nachteilig ist es ferner, daß bei einem entsprechend geschützten Zugriff auf einen externen Rechner (Server) bei dem Rechner, über den der Benutzer den Zugang herstellen will (Client) jeweils auch die entsprechende Hardware zur Erkennung der biologischen Merkmale vorhanden sein muß. Ein Zugriff auf einen mittels Fingerabdruck geschützten Server ist beispielsweise dann nicht möglich, wenn der konkrete Client-Rechner nur über eine Iris-Erkennungs-Einrichtung verfügt (und umgekehrt). Diese biologisch bedingte und nicht beseitigbare "Inkompatibilität" standt bisher einer weiten Verbreitung derartiger Systeme entgegen.
Bekannt ist ferner ein Datenverarbeitungsprogramm zur EDV-Sicherheit, welches Parameter wie Schreibdynamik und Tastaturanschlag erfaßt, auswertet und mit vorgegebenen Informationen vergleicht. Nach der Installation verlangt dieses Datenverarbeitungsprogramm eine längere Schreibprobe, um mittels statistischer Proben und Verfahren der künstlichen Intelligenz das persönliche Tippverhalten eines Nutzers zu erkennen. Später gibt dieses Datenverarbeitungsprogramm einen zufällig gewählten Satz vor, den der Anwender abschreiben muß. Insoweit ist dieses Verfahren mit der oben erwähnten Spracherkennung zu Identifizierungszwecken vergleichbar.

Als Vertriebsform von Software ist ferner die sogenannte Pay-CD-ROM bekannt. Hierbei befinden sich ein oder mehrere verschlüsselte Programme auf einem Datenträger. Der gesamte Datenträger oder einzelne Dateinen können frei kopiert und vertrieben, aber infolge der Verschlüsselung nicht benutzt werden. Zur Entschlüsselung eines Programmes benötigt der Benutzer ein Paßwort. Dieses Paßwort wird üblicherweise nur gegen Bezahlung abgegeben. Auch diese Systeme haben sich in der Vergangenheit als so unsicher erwiesen, daß sie sich letztlich nicht durchgesetzt haben. Von der "Yellow-point"-CD (Handelsname) wurden beispielsweise auf der CEBIT 1994 100.000 Stück kostenlos verteilt, in der Erwartung, daß eine Vielzahl von Personen sich zu der Vielzahl der auf dieser CD-ROM befindlichen Anwenderprogramme (und einiger Computerspiele) sich die Paßwörter kaufen. Tatsächlich waren alle Paßwörter innerhalb von 24 Stunden gecrackt, so daß noch auf dieser CEBIT Listen mit Paßwörtern zur Entschlüsselung aller Programme dieser CD-ROM in den Umlauf kamen. Bei den 100.000 CD-ROMS in Verbindung mit den Paßwortlisten war somit Software in einem Endverbraucherkaufpreis von über 2 Milliarden DM ungeschützt im Umlauf.

Bekannt ist ferner, daß beim Telebanking über das Internet zur Systeminitialisierung beliebige Bewegungen mit der Computermaus erforderlich sind. Wenn eine Homepage über das Internet aufgerufen wird, so wird im Regelfall das betreffende Bild in den Arbeitsspeicher des aufrufenden Datenverarbeitungsgeräts geladen. Ein automatisiertes Nachladen erfolgt allenfalls im Zusammenhang mit der Darstellung von bewegten Bildern. Dies ist ein einseitiges Liefern von Dateien an den empfangenden Rechner. Der die Homepage versendende Rechner erhält insoweit keine Rückantwort des empfangenden Rechners. Insoweit ist es bekannt, zur Erzielung einer Rückantwort des empfangenden Rechners den Benutzer des empfangenden Rechners aufzufordern, zur Systeminitialisierung eine beliebige, nicht spezifizierte Mausbewegung auszuführen. Erst anschließend besteht für den Telebanking-Benutzer die Möglichkeit eine Legitimationsnummer und ein Paßwort in entsprechende Datenfelder einzugeben und zu übermitteln. Dieses System soll offensichtlich dazu dienen, daß nicht ein menschlicher Benutzer, sondern roboterhaft ein Computer die Homepage einer Bank aufruft, um beispielsweise automatisierte Hacker-Attacken auszuführen, dies zu erkennen und zu unterbinden. Die beliebige Mausbewegung dient insoweit nicht zur Identifizierung eines konkreten Benutzers oder eines konkreten Bewegungsbildes, sondern allein zur Unterscheidung Mensch oder Maschine. Ein beliebige Mausbewegung kann jedoch auch von einer Software simuliert werden.

Bekannt ist ferner der Einsatz von Cookies im Internet. Derartige Cookies sind geeignet und bestimmt automatisiert Informationen vom angerufenen Rechner an den angerufenen Rechner zu übermitteln. Cookies werden jedoch von vielen Anwendern abgelehnt, da dem Anwender ihre konkrete Funktionalität nicht oder nicht eindeutig bekannt ist.

Die Erfindung soll die Nachteile aller vorgenannten Verfahren vermeiden. Der Erfindung liegt daher die Aufgabe zugrunde, ein Verfahren zur Erhebung und/oder Ermittlung von Bewegungsdaten zu schaffen.

Diese Aufgabe wird erfindungsgemäß durch den kennzeichnenden Teil des Anspruchs 1) gelöst.

Dieses Verfahren soll darüber hinaus geeignet sein, eine Identifizierung, ob ein berechtigter Benutzer tätig ist, zu ermöglichen.

Ein erfindungsgemäßes Sicherungssystem besteht darin, daß der Benutzer vor Aufruf der eigentlichen Zieldatei oder vor Abspeicherung einer erzeugten Datei in einem ersten Verfahrensschritt definierte Dateien öffnen und wieder schließen muß, wobei die Reihenfolge des Öffnens und wieder Schließens in einer bestimmten Reihenfolge zu erfolgen hat. Die diesbezüglichen Bewegungsdaten werden dann in einem zweiten Verfahrensschritt wie ein Passwort verarbeitet, um dem Benutzer den Zugang zur Zieldatei oder ein "passwortgeschütztes" (= Bewegungsdaten) Abspeichern der erzeugten Datei zu ermöglichen. Soweit das erfindungsgemäße Verfahren zur Sicherung abzuspeichernder Dateien vor unbefugten Zugriffen verwendet werden soll, besteht in erfindungsgemäßer Weise die Möglichkeit, daß die Erzeugung eines Passwortes in Form von Bewegungsdaten mit einem weiteren Verfahrensschritt in Form einer anschliessenden automatischen Verschlüsselung der Datei verknüpft wird.

In erfindungsgemäßer Weise besteht ferner die Möglichkeit, daß das Öffnen und Schließen dieser Dateien innerhalb einer bestimmten Zeit zu erfolgen hat. Hierzu wird in einem Zwischenschritt am Anfang und am Ende der Erhebung dieser Bewegungsdaten abgefragt und mit einem vorgegebenen Zeitlimit verglichen.

Nachfolgend wird die Erfindung anhand eines Ausführungsbeispiels in Verbindung mit der Zeichnung näher erläutert. Hierbei zeigt
- Figur 1: eine schematische Darstellung eines PC's,
- Figur 2: eine schematische, grafische Darstellung der Daten der Mausbewegung,
- Figur 3: eine schematische Darstellung der Erhebung und Weiterverarbeitung dieser Bewegungsdaten und
- Figur 4: eine schematische Darstellung von Bewegungsdaten für Sicherungszwecke.

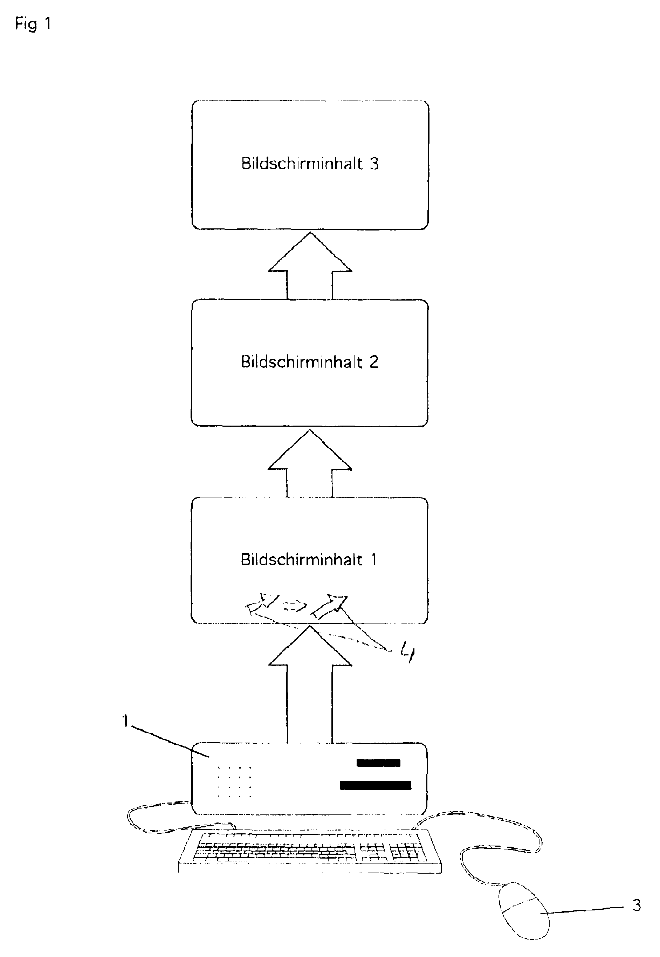

Figur 1 zeigt den schematischen Aufbau eines Personal Computers (1). Dieser Personal Computer besitzt eine übliche Tastatur (2) und eine Maus (3). Der an dem Personal Computer (1) angeschlossene Monitor ist nicht dargestellt, dargestellt sind dafür drei schematische Bildschirminhalt (Bildschirminhalt 1 bis Bildschirminhalt 3). Wenn die Maus (3) bewegt wird, dann bewegt sich in bekannter Weise auch ein Cursor (4) - bei Bildschirminhalt 1 schematisch darstellt. Wenn durch einen Klick auf der Maus (3) ein anderer Bildschirminhalt aufgerufen wird, dann werden sowohl
a) die Bewegungsdaten der Maus, vorzugsweise in ihren x- und y-Koordinaten und (optional);
b) die Uhrzeit vom System des Computers abgefragt und aufgezeichnet und (optional);
c) jeder Mausklick und (optional);
d) jede Tastatureingabe und (optional);
e) vom Rechner automatisch erzeugte Systemprotokoll-Daten, wie Gesamtlaufzeit des Systems, Kennzeichnungs-Daten vom Prozessor, dem Bios oder anderer Hardware-Komponenten
erfaßt. Diese Bewegungsdaten werden unabhängig von anderen erzeugten Daten, insbesondere personenbezogenen Daten, wie Bestellungen, E-Commerz-Daten, oder ähnliches, kontinuierlich nach ihrer Erzeugung in eine laufend fortgeschriebene Datei gespeichert.

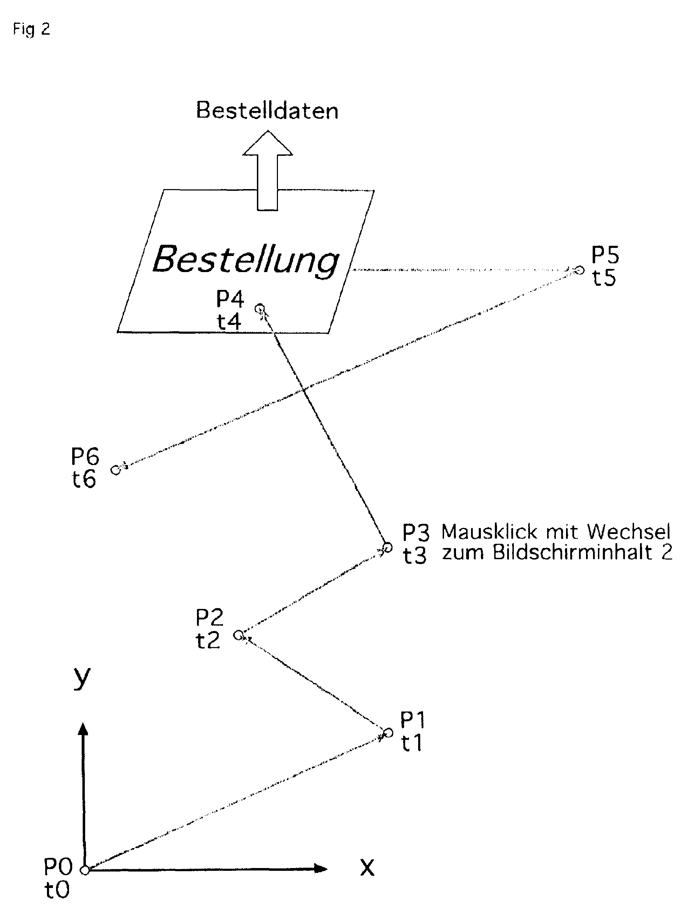

Figur 2 zeigt eine schematische, grafische Darstellung derartiger Daten.

Zum Zeitpunkt t0 beginnt die Mausbewegung beispielhaft am unteren linken Bildschirmbereich (nur schematisch dargestellt). An dieser Stelle sind auch die Koordinaten x und y schematisch dargestellt. Zum Zeitpunkt t1 hat die Maus einen ersten Punkt (P1), zum Zeitpunkt t2 einen zweiten Punkt (P2) und zum Zeitpunkt t3 einen dritten Punkt (P3) erreicht. In diesem Ausführungsbeispiel erfolgt an dem dritten Punkt (P3) ein Mausklick mit dem Wechsel zum Bildschirminhalt 2. Auf diesem Bildschirminhalt bewegt sich die Maus dann zu einem vierten Punkt (P4), welcher zu einem Zeitpunkt t4 erreicht wird. An dem vierten Punkt (P4) wird beispielhaft eine Bestellung aufgegeben. Diese Bestelldaten werden vorzugsweise unabhängig von den Bewegungsdaten an den bestimmungsgemäßen Adressaten übermittelt. Anschließend bewegt sich beispielhaft die Maus zu einem fünften Punkt (P5), welchen sie zu einem Zeitpunkt t5 erreicht. Anschließend bewegt sich beispielhaft die Maus zu einem sechsten Punkt (P6), welchen sie zu einem Zeitpunkt t6 erreicht (u.s.w.).

Als Bewegungsdaten werden auf dem Weg zwischen dem Startpunkt (P0) und dem sechsten Punkt (P6) alle zugehörigen x- und y-Koordinaten, alle Zeitpunkte (t0 bis t6), alle Angaben über den Wechsel zu einem anderen Bildschirminhalt (hier zu Bildschirminhalt 2) erfaßt und als Bewegungsdaten unabhängig von den Bestelldaten kontinuierlich auf dem lokalen Rechner des Benutzers oder kontinuierlich oder paketweise auf einen vorher definierten sonstigen Rechner gespeichert.

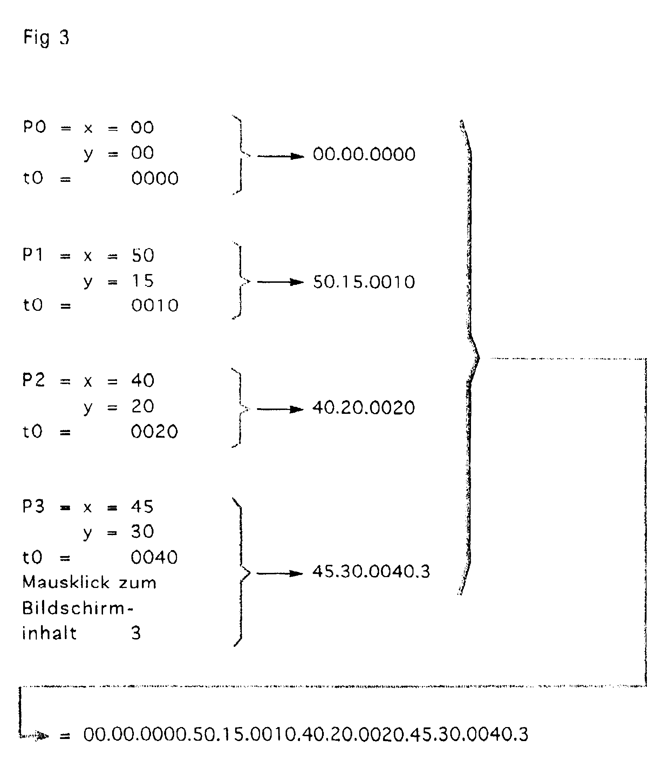

Figur 3 zeigt eine schematische Darstellung der Erhebung und Weiterverarbeitung dieser Bewegungsdaten. In diesem Ausführungsbeispiel werden hierbei alle Bewegungspunkte mit einer voranlaufenden Kennziffer 2**, die dazwischenliegenden (x- und y-Koordinaten beispielhaft zweistellig), die Zeitdaten in Sekunden (beispielhaft vierstellig) und weitere spezifische Bewegungsdaten wie beispielsweise der Mausklick zum Wechsel auf den Bildschirminhalt 2 als einstellige Kennziffern gekennzeichnet, wobei in diesem Ausführungsbeispiel der Mausklick zum Wechsel auf einen anderen Bildschirminhalt die Kennziffer 3 und ein Mausklick zur Versendung von Bestelldaten eine andere Kennziffer hat (nicht dargestellt).

Aus Gründen der Übersichtlichkeit beschränkt sich die Figur 3 auf die Bewegung zwischen dem Ausgangspunkt (P0) und dem dritten Punkt (P3) entsprechen der Figur 2. Am unteren Ende der Figur 3 sind die Bewegungsdaten in einer Form dargestellt, wie sie dann beispielsweise abgespeichert werden können.

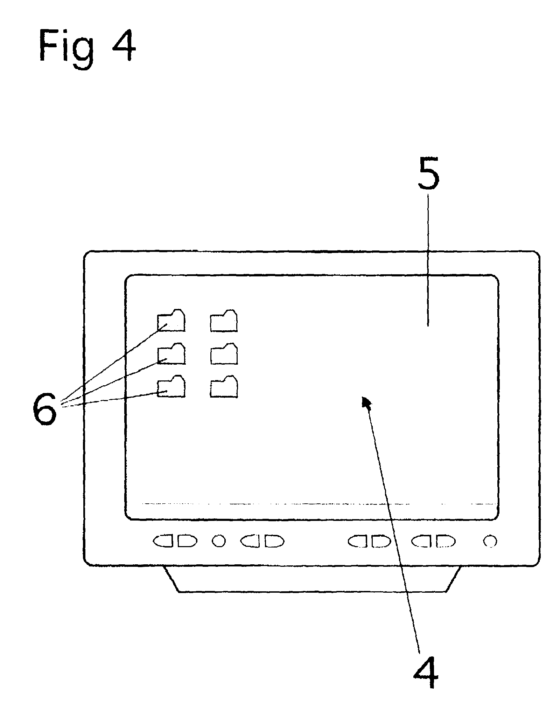

Figur 4 zeigt schematisch die Erzeugung von Bewegungsdaten zu Sicherheitswecken.

Dieses Verfahren kann in erfindungsgemäßer Weise sowohl zum Öffnen von gesicherten Dateien, als auch zum gesicherten Speichern von erzeugten Dateien verwendet werden.

Figur 4 zeigt einen Bildschirm (5). Auf diesem Bildschirm sind verschiedene Icon's (6) abgebildet, wie sie bei Windows-orientierten Bildschirmoberflächen üblich sind. In erfindungsgemäßer Weise bewegt der Benutzer den Curser (4) von Icon zu Icon (6).

Zum Öffnen einer Datei muß der Benutzer in einer vorherbestimmten Reihenfolge die Icons (6) mit dem Curser (4) anfahren und in einer vorherbestimmten Reihenfolge die über die Icon's (6) anzusprechenden Dateien öffnen und wieder schließen. Erst wenn er diesen "Pflichtparcours" abgefahren hat, öffnet sich in einem weiteren Verfahrensschritt seine Zieldatei.

Die Definition der Reihenfolge des Anfahrens der Icon's (6) kann hierbei in unterschiedlicher Weise vorher festgelegt werden:
a) eine Festlegung ist beispielsweise durch eine vorgegebene Instruktion möglich.
b) In erfindungsgemäßer Weise verfügt der Rechner über eine Datei aller vorhandener Icons (6), wobei Teil dieser Datei oder Bestandteil einer separaten Datei Datensätzen sind, welche die Reihenfolge des Aufrufs der Icons (6) beinhalten.
c) Die Reihenfolge kann jedoch auch dadurch bestimmt werden, daß der Rechner des Benutzers in einem ersten Verfahrensschritt feststellt welche Icons auf dem Bildschirm (Desktop) dargestellt sind und anschließend über einen Zufallsgenerator die Reihenfolge des Aufrufs der Icons (6) festlegt und dem Benutzer mitteilt.

Dieses Verfahren ist auch dazu geeignet, neu erzeugte Dateien sicher abzuspeichern. Der Benutzer muß sich hierzu nur die Reihenfolge des Aufrufs der Icon merken.

Zum Abspeichern neu erzeugter Dateien ist es jedoch in erfindungsgemäßer Weise auch möglich, daß der Benutzer die Reihenfolge des Aufrufs der Icon's und des Schließens der Dateien selbst bestimmt.

Es liegt auf der Hand, daß es bei den Sicherungssystemen vorteilhaft ist, wenn als Bewegungsdaten nur die Reihenfolge der Icon's (6) verwendet wird und nicht ihr vektoreller Abstand. Eine Verwendung der exakten Vektor-Größen hätte zur Folge, daß man mit jeder Änderung der Anordnung der Icon's (6) auf dem Bildschirm (5) unbeabsichtigt auch die Zugangsmöglichkeit zum "Passwort" verändert. Da eine exakte Wiederpositionierung eines Icon's (6) auf dem Bildschirm (5) nur sehr schwer möglich ist, hätte die Verwendung von exakten vektorellen Bewegungsdaten in diesem Bereich fatale Folgen. Aus diesem Fall ist es vorteilhaft, wenn man nicht exakten vektoriellen Größen arbeitet, sondern mit Bereichen innerhalb jener vektorielle Bewegungsdaten akzeptiert werden._Es liegt auf der Hand, daß in erfindungsgemäßer Weise auch die Zeit, in welcher der Zugriff auf die definierten Icon's (6) zu erfolgen hat, als Größe mitberücksichtigt wird.

In erfindungsgemäßer Weise kann ferner auch die Zahl der Zugriffe auf diese Bewegungsdaten vorher festgelegt werden, so daß nach einem Überschreiten der erlaubten Zugriffszahl ein Zugriff nur noch mit einem Supervisor-Passwort möglich ist. In erfindungsgemäßer Weise kann dieses Supervisor-"Passwort" ein beliebiges bekanntes Sicherungssystem sein. Insoweit kann
a) das erfindungsgemäße System und/oder
b) herkömmliche alphanumerische Passwörter, welche über die Tastatur einzugeben sind und/oder
c) biologische Sicherungsverfahren
verwendet werden.
In erfindungsgemäßer Weise kann das Verfahren zusätzlich dadurch gesichert werden, daß in einem ersten Verfahrensschritt von der Gesamtheit der übermittelten Daten oder einer Teilmenge hiervon eine Prüfsumme gebildet wird. Anschließend wird in einem Zielcomputer in einem zweitem Verfahrensschritt mit dem selben Algorithmus aus diesen Daten die Prüfsumme neu berechnet. In einem drittem Verfahrensschritt wird dann die neu berechnete Prüfsumme mit der übermittelten Prüfsumme verglichen. In einem vierten Verfahrensschritt werden bei Übereinstimmung der neu berechneten Prüfsumme mit der übermittelten Prüfsumme im versendenden Rechner die Daten vollständig gelöscht.

### Bezugszeichen:

- Personal Computer: 1
- Tastatur: 2
- Maus: 3
- Bildschirminhalt 1 - 3 Cursor: 4
- Bildschirm: 5
- Icons: 6

## Patentansprüche

1. Verfahren zur Erhebung von Daten, dadurch gekennzeichnet, daß von jedem Zugriff auf eine Top-Level-Datei und/oder nachgeordneter Dateien, in einem ersten Verfahrensschritt alle Veränderungsdaten eines bewegungsorientiertem Dateneingabegerätes in einem Speicher abgespeichert werden.

2. Verfahren zur Erhebung von Daten nach 1), dadurch gekennzeichnet, daß in dem ersten Verfahrensschritt
a) bei jeder Veränderung der Bewegungsdaten das Systemdatum und/oder die Systemzeit des betreffenden Computers abgefragt und zusammen mit den Veränderungsdaten in diesem Zwischenspeicher abgespeichert wird,
b) daß eine Kennzeichnung der aktuell aktivierten Datei zusammen mit den Veränderungsdaten in diesem Zwischenspeicher abgespeichert wird,
und daß in einem zweiten Verfahrensschritt alle derart abgespeicherten Daten automatisch an einen vorher definierten Empfänger übermittelt werden.

3. Verfahren zur Erhebung von Daten nach Anspruch 1) oder 2), dadurch gekennzeichnet, daß die Veränderungsdaten eines bewegungsorientierten Dateneingabegeräts in einem weiteren Verfahrensschritt als Schlüssel zum Öffnen und/oder als Schlüssel zum Abspeichern einer Datei oder eines Datenverarbeitungsprogramms verwendet werden.

4. Verfahren nach Anspruch 3), dadurch gekennzeichnet, daß die Veränderungsdaten eines bewegungsorientierten Dateneingabegeräts keine vektoriellen Daten über den Abstand zwischen zwei Icons (6) beinhalten.

5. Verfahren nach Anspruch 3), dadurch gekennzeichnet, daß die Veränderungsdaten eines bewegungsorientierten Dateneingabegeräts vektoriellen Daten über den Abstand zwischen zwei Icons (6) beinhalten, wobei jedes Icon (6) einen Bereich besitzt, innerhalb dessen ein vektorielles Datum als ordnungsgemäß anerkannt wird.

6. Verfahren nach einem oder mehreren der Ansprüche 3) bis 5), dadurch gekennzeichnet, daß die Veränderungsdaten eines bewegungsorientierten Dateneingabegeräts durch eine Instruktion festgelegt sind.

7. Verfahren nach einem oder mehreren der Ansprüche 3) bis 5), dadurch bekennzeichnet, daß die Veränderungsdaten eines bewegungsorientierten Dateneingabegerätes in einem vorangegangenen Verfahrensschritt von dem Rechner einer Datei entnommen und dem Benutzer mitgeteilt werden.

8. Verfahren nach Anspruch 7), dadurch bekennzeichnet, daß die Veränderungsdaten eines bewegungsorientierten Dateneingabegerätes in einem vorangegangenen Verfahrensschritt von dem Rechner automanisch durch einen Zufallsgenerator erzeugt werden.

9. Verfahren nach einem oder mehreren der Ansprüche 4) bis 7), dadurch gekennzeichnet, daß die Veränderungsdaten eines bewegungsorientierten Dateneingabegeräts vom Benutzer zum Zwecke der Erzeugung eines Schlüssels definiert werden.

10. Verfahren nach einem oder mehreren der Ansprüche 3) bis 8), dadurch gekennzeichnet, daß in einem weiteren Verfahrensschritt nach der Eingabe der richtigen Veränderungsdaten eines bewegungsorientierten Dateneingabegeräts eine neu erzeugte Datei verschlüsselt und so abgespeichert wird.

11. Verfahren nach einem oder mehreren der Ansprüche 3) bis 9), dadurch gekennzeichnet, daß die Zahl der möglichen Zugriffe auf die Bewegungsdaten vorher festgelegt ist, und daß nach einem Überschreiten der erlaubten Zugriffszahl ein Zugriff nur mit einem Supervisor-Paßwort möglich ist.

12. Verfahren nach Anspruch 11), dadurch gekennzeichnet, daß das Supervisor-Paßwort nach einem oder mehreren der Ansprüche 1) bis 9) erstellt wird oder daß das Supervisor-Paßwort ein alphanumerisches Paßwort, welches über die Tastatur (2) einzugeben ist, ist oder, daß das Supervisor-Paßwort über ein biologisches Sicherungsverfahren ermittelt wird.

13. Verfahren nach einem oder mehreren der Ansprüche 3) bis 12), dadurch gekennzeichnet, daß alle Veränderungsdaten eines bewegungsorientiertem Dateneingabegerätes unabhängig von anderen erzeugten Daten kontinuierlich nach ihrer Erzeugung in eine laufend fortgeschriebene Datei gespeichert.

14. Verfahren nach einem oder mehreren der Ansprüche 3) bis 13), dadurch gekennzeichnet, daß in einem ersten Verfahrensschritt von der Gesamtheit der übermittelten Daten oder einer Teilmenge hiervon eine Prüfsumme gebildet wird, daß in einem Zielcomputer in einem anschließendem Verfahrensschritt mit dem selben Algorithmus aus diesen Daten die Prüfsumme neu berechnet wird, daß in einem drittem Verfahrensschritt die neu berechnete Prüfsumme mit der übermittelten Prüfsumme verglichen wird, und daß in einem viertem Verfahrensschritt bei Übereinstimmung der neu berechneten Prüfsumme mit der übermittelten Prüfsumme im versendenden Rechner die Daten vollständig gelöscht werden.
